# EUROPÄISCHE PATENTSCHRIFT

(11) **EP 2 829 859 B1**
(45) Veröffentlichungstag und Bekanntmachung des Hinweises auf die Patenterteilung: **21.02.2018**
(21) Anmeldenummer: 14173259.4
(22) Anmeldetag: 20.06.2014
(51) Int. Cl.: G01L 5/16, G01L 3/10, G01L 5/00

(54) **Verfahren und Messsystem zur Ermittlung von Verformungen eines geometrischen Körpers mittels Kraft- oder Verformungsmesssensoren**
Method and measuring system for determining deformations a geometric body by means of force or deformation measuring sensors
Procédé et système de mesure destinés à déterminer des déformations d'un corps géométrique au moyen de capteurs de mesure de déformation ou de dynamomètre

(30) Priorität: 25.07.2013 DE 102013107953
(43) Veröffentlichungstag der Anmeldung: 28.01.2015
(73) Patentinhaber: pro.micron GmbH & Co.KG, 87600 Kaufbeuren (DE)
(72) Erfinder: Wulff, Dr.-Ing. Kolja, 87600 Kaufbeuren (DE)
(74) Vertreter: Raffay & Fleck

(56) Entgegenhaltungen:
- EP-A2- 0 143 434
- US-A1- 2006 107 761
- US-B2- 7 694 586

## Beschreibung

Die Erfindung betrifft ein Verfahren zur Ermittlung von Verformungen eines geometrischen Körpers bzw. zum Messen von auf einen geometrischen Körper wirkenden Kräften bzw. Momenten mittels Kraft- oder Verformungsmesssensoren gemäß dem Oberbegriff des Anspruchs 1. Sie betrifft ferner ein entsprechendes Messsystem nach dem Oberbegriff des Anspruchs 5.

In den unterschiedlichsten technischen Anwendungen sind Informationen über Kräfte oder Momente, die auf einen Körper, z.B. ein Werkzeug oder ein Werkstück oder eine Werkzeugaufnahme oder dgl. wirken, bzw. sind Kenntnisse über durch entsprechende Kräfte oder Momente hervorgerufene Verformungen des Körpers wichtige Parameter, die gemessen und/oder überwacht werden. So sind beispielsweise Anwendungen bekannt, bei denen für die Überprüfung der korrekten Plananlage und Einspannung eines Werkzeuges in einem Spindelkopf einer Arbeitsspindel einer Bearbeitungsmaschine entsprechende Kraft- bzw. Verformungssensoren zum Einsatz kommen. Ein solches Verfahren bzw. eine entsprechende Überwachungsvorrichtung sind in der EP 1 889 685 A1 beschrieben. Dort wird die entsprechende Überwachung genutzt, um mögliche Fehleinspannungen des Bearbeitungswerkzeuges aufzudecken, wie es z.B. durch einen in den Spindelkopf eingedrungenen Span oder dgl. hervorgerufen werden kann. Eine solche Fehleinspannung führt, so wird es in der Schrift beschrieben ist, zu von der Sollbahn abweichenden Bahnen des Bearbeitungswerkzeuges und damit zu einer Fehlbearbeitung der Werkstücke, letztlich zu Qualitätsverlusten bis hin zu Ausschuss.

Eine weitere Anwendung, in der eine entsprechende Ermittlung von Verformungen eines geometrischen Körpers bzw. das Messen von auf diesen Körper wirkenden Kräften bzw. Momenten (Drehmomenten) eine Rolle spielt, ist in der EP 2 103 379 A1 beschrieben. Dort werden gemessene Kräfte bzw. Drehmomente zur Überwachung eines Bearbeitungsvorganges herangezogen, z.B. um zu erkennen, ob ein Werkzeug mit einer gewünschten Vorschubkraft entlang des Bearbeitungsweges am Werkstück vorangeführt wird.

Ein Problem im Zusammenhang mit den in den genannten Druckschriften offenbarten Verfahren und Messsystemen besteht darin, dass es häufig aufgrund ungenauer Kenntnis über die Orientierung der einwirkende Kräfte und Momente bzw. über Anteile derselben oder der Richtung der Verformung entlang verschiedener Koordinatenrichtungen zu verfälschten Messergebnissen kommen kann. So kann beispielsweise bei der Überwachung von Kräften oder Momenten, wie sie in der EP 2 103 379 A1 beschrieben ist, in verschiedenen Situationen nicht zwischen tatsächlichen Messwerten und Systemfehler bedingten Artefakten unterschieden werden. Auch im Hinblick auf die in der EP 1 889 685 A1 offenbarte Messtechnik und Messsystemanordnung können aufgrund dieses Umstandes nicht immer und zuverlässig alle, auch nur geringe Abweichungen und Fehler im Hinblick auf die dort im Vordergrund stehende Einspannung des Werkzeuges erkannt werden.

In der DE 40 09 286 C2 ist eine Möglichkeit beschrieben, mit der mittels DMS-Anordnungen eine genauere Überwachung bzw. Messung der Torsion eines stabförmigen Hohlkörpers erreicht werden kann. Dazu werden auf einer im Inneren des Hohlkörpers gespannten Membranoberfläche unterschiedlich ausgerichtete DMS-Sensoren angeordnet, und werden diese mit ihren Signalausgängen in einer Brückenschaltung verschaltet. Aufgrund des Umstandes, dass sich bei einer Torsion des Rohres eine Verformung der Membran in zwei Richtungen ergibt, wird durch die geschickte Verschaltung der Sensoren mit ihren Signalausgängen in der Brückenschaltung eine Verstärkung des Gesamtsignals und wird damit einer Erhöhung der Empfindlichkeit der Messanordnung erreicht. Allerdings wird auch bei dieser Vorgehensweise lediglich die Verformung bzw. ein anliegendes Moment entlang einer Raumrichtung, hier entlang einer rotatorischen Koordinatenrichtung, überwacht.

In der US 2006/0107761 A1 ist eine Einrichtung und ist auch ein Verfahren offenbart, die bzw. das mittels in Brückenschaltungen verschalteten Kraft- bzw. Verformungssensoren an einem Bauteil anliegende Kräfte bzw. Spannungen in unterschiedlichen Raumrichtungen ermittelt. Eine etwaige Betrachtung einer Symmetrie des Bauteils spielt bei der Auswertung der Messsignale keine Rolle.

Auch die US 7,694,589 B2 beschreibt einen Messaufbau und ein Messverfahren, bei denen mittels in zwei Wheatstonesche Brücken verschalteten Kraftsensoren an einem Bauteil liegende Lasten ermittelt werden. Auch hier spielen bei der Auswertung der Messsignale Überlegungen zur Symmetrie des Bauteils keine Rolle.

Eine ähnliche Anordnung und Vorgehensweise offenbart schließlich auch die EP 143 434 A2, auch hier allerdings ohne jegliche Betrachtung von Symmetrien bei der Auswertung der Messsignale.

Vor dem Hintergrund dieses bekannten Standes der Technik ist es Aufgabe der Erfindung, ein Verfahren der eingangs genannten Art dahingehend weiterzubilden, dass es eine genauere Ermittlung von Verformungen des geometrischen Körpers bzw. ein genaueres Messen von auf diesen wirkenden Kräften oder Momenten und eine Auswertung im Hinblick unter Berücksichtigung der Formgebung des geometrischen Körpers ermöglicht. Ein weiterer Aspekt der mit der Erfindung zu lösenden Aufgabe besteht darin, ein entsprechendes Messsystem anzugeben, welches ausgehend von dem bekannten Stand der Technik zum Erreichen des angegebenen Zieles weitergebildet ist.

Diese Aufgabe wird hinsichtlich des Verfahrens gelöst durch ein solches Verfahren zur Ermittlung von Verformungen eines geometrischen Körpers bzw. zum Messen von auf einen geometrischen Körper wirkenden Kräften bzw. Momenten mit den Merkmalen des Patentanspruches 1. Vorteilhafte Weiterbildungen eines solchen Verfahrens sind in den abhängigen Ansprüchen 2 bis 7 angegeben. Hinsichtlich des Messsystems wird diese Aufgabe gelöst durch ein solches Messsystem zur Ermittlung von Verformungen eines geometrischen Körpers bzw. zum Messen von auf einen geometrischen Körper wirkenden Kräften bzw. Momenten, wie es in Anspruch 5 bezeichnet ist. Vorteilhafte Weiterbildungen eines solchen Messsystems sind in den abhängigen Ansprüchen 8 bis 16 bezeichnet.

Vergleichbar dem in der DE 40 09 286 C2 angegebenen Verfahren wird zunächst auch bei dem erfindungsgemäßen Verfahren zur Ermittlung von Verformungen eines geometrischen Körpers bzw. zum Messen von auf einen geometrischen Körper wirkenden Kräften bzw. Momenten eine Mehrzahl von Kraft- oder Verformungsmesssensoren an dem geometrischen Körper angeordnet. Dabei erfolgt diese Anordnung in wenigstens zwei Gruppen und derart, dass eine erste Gruppe der Kraft- oder Verformungsmesssensoren auf dem geometrischen Körper lastende Kräfte bzw. Verformungen des geometrischen Körpers entlang einer ersten Raumrichtung bezogen auf ein relativ zu dem geometrischen Körper ortsfestes Koordinatensystem erfasst und dass eine zweite Gruppe der Kraft- oder Verformungssensoren auf dem geometrischen Körper lastende Kräfte bzw. Verformungen des geometrischen Körpers entlang einer zweiten Raumrichtung bezogen auf ein relativ zu dem geometrischen Körper ortfestes Koordinatensystem erfasst, wobei diese zweite Raumrichtung von der ersten Raumrichtung unabhängig ist.

Anders als bei diesem bekannten Stand der Technik offenbart wird nun aber nicht etwa eine Auswertung der Signalausgänge der Sensoren nur in einer Weise vorgenommen, um eine Einwirkung von Kräften bzw. Verformungen entlang nur einer einzigen Raumrichtung zu analysieren (also gleichermaßen bei nicht dieser Raumrichtung folgenden Kräften oder Verformungen nur deren vektoriellen Anteil zu bestimmen, der in der betrachteten Raumrichtung liegt), sondern aufgrund einer Korrelation der Signalausgänge der verschiedenen Sensoren eine Betrachtung und Beurteilung von Kraft- bzw. Verformungskomponenten in zumindest zwei Raumrichtungen vorzunehmen, die voneinander unabhängig sind - ähnlich, wie dies z.B. in der Anordnung gemäß der US 2006/0107761 A1 bereits unternommen worden ist.

Unter "Raumrichtung" bzw. "Raumrichtungen" wird hier nicht zwangsläufig eine linear verlaufende Richtung bzw. linear verlaufende Richtungen verstanden. Hierunter fallen auch Koordinatenverläufe bzw. Koordinatenrichtungen in nicht linearen Koordinatensystemen, so z.B. in Zylinder- oder Polarkoordinaten. Entscheidend ist hier nur, dass es sich um in dem Koordinatensystem voneinander unabhängige Raumrichtungen handelt.

Eine entsprechende Auswertung der Signale kann z.B. durch Addition oder Subtraktion von ausgewählten Sensorsignalen erfolgen. Dabei können z.B. Signale von Sensoren, die in einer Raumrichtung liegende Komponenten von Kraft- bzw. Verformungsvektoren erfassen, addiert werden, um eine Summenkraft oder eine kumulierte Verformung zu erhalten. Hier zugleich können - in der Regel bestimmt über die Geometrie des Körpers - bestimmte Sensoren (z.B. in einer zylindrischen Anordnung einander auf einer Zylinderebene diametral gegenüberliegende Sensoren) betrachtet und deren Signalausgänge einer Differenzbildung unterworfen werden, um so asymmetrisch anliegende Kräfte oder Verformungen in dieser Richtung zu bestimmen.

Insbesondere können dabei die Signalausgänge einzelner Sensoren zugleich auf mehrere Arten korreliert werden, um verschiedene Informationen zu erhalten. So können z.B. Signale einer Gruppe von Sensoren in einer ersten Auswertung addiert werden, um die in einer Richtung wirkende resultierende Komponente einer Kraft oder Verformung zu erhalten, und können zugleich in einer zweiten Auswertung Signale derselben Sensoren Differenz bildend verknüpft werden, um z.B. Symmetriebrüche zu erkennen.

Die Verknüpfung der Signale kann sowohl analog, also mit Analogsignalen als Ausgangssignale, durch entsprechende an sich bekannte Verschaltungen erfolgen als auch digital mit zunächst digitalisierten Signalen und entsprechenden Software-Algorithmen in einer Rechnereinheit.

Weiterhin sind bei dem erfindungsgemäßen Verfahren, wie dies dem Grunde nach bereits aus dem Stand der Technik bekannt ist, Signalausgänge der Kraft- oder Verformungssensoren zur Signalerfassung und -auswertung in einer elektrischen Brückenschaltung verschaltet. Eine solche Brückenschaltung kann im Falle analoger Signale mit entsprechenden Schaltelementen realisiert sein; sie kann aber auch - im Falle digitaler oder digitalisierter Signale - in einem softwarebasierten Algorithmus virtuell nachgebildet sein.

Dabei sind erfindungsgemäß je Gruppe der Kraft- oder Verformungssensoren wenigstens vier solche Sensoren vorgesehen und sind ferner jeweils vier der Kraft- oder Verformungssensoren mit ihren Signalausgängen in einer elektrischen Brückenschaltung verbunden und werden die Ausgangssignale der so gebildeten wenigstens zwei elektrischen Brückenschaltungen für die Ermittlung der Verformungen bzw. Kräfte oder Momente ausgewertet.

Ein erfindungsgemäßes Messsystem ist entsprechend mit in den genannten Gruppen angeordneten Messsensoren aufgebaut, deren Ausgangssignale für die entsprechende Auswertung von Kraft- oder Verformungskomponenten in zumindest zwei unabhängigen Raumrichtungen in einer Auswerteeinrichtung korreliert werden. Dies geschieht erfindungsgemäß durch Zusammenführen in entsprechenden Brückenschaltungen. Dabei ist die Auswerteeinrichtung des Messsystems eingerichtet, um eine entsprechende Auswertung der Ausgangssignale der Brückenschaltungen durchführen zu können.

Nach der Erfindung werden für die verwendeten Brückenschaltungen also zumindest acht Kraft- oder Verformungssensoren vorgesehen, von denen jeweils vier der ersten und vier weitere der zweiten Gruppe angehören, wobei dann diese Kraft- oder Verformungssensoren mit je vier Exemplaren zu einer Brückenschaltung zusammengefasst sind und die Brückenschaltungen mit ihren Ausgangssignalen in die Auswertung eingehen. Dadurch ist es möglich, ein bedeutend feiner aufgelöstes Bild der auf dem geometrischen Körper lastenden Kräfte bzw. Momente bzw. der durch entsprechende Kräfte oder Momente hervorgerufenen Verformungen zu erhalten. Ein solches entsprechend verfeinertes Bild, eröffnet für die verschiedenen Anwendungen deutliche Verbesserungen. So können bei Anwendungen, wie sie in der EP 1 889 685 A1 beschrieben sind, noch präziser Störungen einer planen und symmetrischen Einspannung eines Werkzeuges oder Werkstückes in dem Spindelkopf erkannt und entsprechende Warnungen bzw. Alarmsignale ausgegeben werden. Bei einer Anwendung, wie sie in der EP 2 103 379 A1 beschrieben ist, bei der während eines Bearbeitungsprozesses am Werkzeug bzw. am Werkzeughalter auftretende Kräfte und Momente zur Prozessüberwachung und ggf. -steuerung aufgenommen werden, können die aufgenommenen Messwerte noch präziser hinsichtlich möglicher Fehlmessungen oder Artefakte beurteilt werden, so dass ein präziseres und genaueres Bild erhalten wird.

Eine solche Erhöhung der Präzision ist indes nicht in einer Art und Weise, wie sie in der DE 40 09 286 C2 beschrieben ist, nur mit einer einzigen Brückenschaltung und der dort genannten Art der Auswertung zu erreichen. Hierzu bedarf es des Vorsehens einer größeren Anzahl von Kraft- oder Verformungssensoren und einer - je nach Anwendung aufzubauenden - Verschaltung der Signalausgänge der entsprechenden Sensoren in zumindest zwei Brückenschaltungen. Denn nur so lassen sich verschiedene, entlang unterschiedlicher Raumkoordinaten auftretende Kräfte, Momente bzw. Verformungen bestimmen und in eine je nach Anwendungsform geeignete Auswertung integrieren für eine deutlichere Präzisierung der erhaltenen Messergebnisse bzw. Interpretation der erhaltenen Signale im Hinblick insbesondere auf einen Vergleich von Kräften, Momenten oder Verformungen entlang mehrerer Dimensionen (Raumrichtungen).

Die erfindungsgemäße Auswertung der aus den Brückenschaltungen erhaltenen Signale sieht vor, dass die Verschaltung der Signalausgänge der Kraft- oder Verformungssensoren in den elektrischen Brückenschaltungen so gewählt wird, dass Ausgangssignale der Brückenschaltungen proportional zu der einwirkenden Kraft bzw. zu dem auflastenden Moment bzw. zu einer Verformung des geometrischen Körpers auftreten. Dabei werden dann die Ausgangssignale der wenigstens zwei elektrischen Brückenschaltungen derart ausgewertet, dass diese proportional zur einwirkenden Kraft bzw. zu dem auflastenden Moment bzw. zu einer Verformung des geometrischen Körpers auftretenden Signale zunächst untereinander verglichen und hinsichtlich auftretender Symmetrien ausgewertet und dann, wenn diese Auswertung eine Plausibilität im Hinblick auf aufgrund einer Form des geometrischen Körpers und aufgrund erwarteter Kräfte, Momente oder Verformungen und ihrer Errichtungen zu erwartende Ergebnisse aufweist, diese Signale als Maß für die auflastende Kraft, für anliegende Momente oder eine aufgetretene Verformung gewertet werden. Hier wird mit anderen Worten in der Auswertung zunächst einmal ein in der jeweiligen Situation zu erwartendes Ereignis, z.B. bei der Materialbearbeitung mit einer rotierenden Werkzeugspindel (z.B. beim Bohren, Fräsen oder Drehen) ein in bestimmten Situationen erwarteter Verlauf von auftretenden Kräften, Momenten oder Verformungen vorausgesetzt, es werden dann die Signalausgänge der Brückenschaltungen derart ausgewertet, dass die gemessenen Signale mit den zu erwartenden abgeglichenen werden und eine Deutung der Signale als Maß der Kräfte oder Momente dann erfolgt, wenn die Ergebnisse im Rahmen des Erwarteten liegen. Zum Beispiel kann bei einem Fräsvorgang mit rotierender Werkzeugschneide ein Auftreten einer durch die Schnittführung hervorgerufenen Reaktionskraft anhand der Drehzahl und der Geometrie der Schneiden des Werkzeuges grob in einem Erwartungsmuster vorhergesagt werden. Eine entsprechende Auswertung der Brückenschaltungen und der Signalausgänge wird zunächst mit dieser Erwartung abgeglichen und nur dann weiter verarbeitet, wenn es mit einem erwarteten Signalverlauf eine Übereinstimmung gibt. Kommt es hier zu Abweichungen, so kann im Verlaufe des Verfahrens eine entsprechende Fehlermeldung ausgegeben werden, bzw. kann das entsprechende Messsystem eine solche Fehlermeldung generieren. Denn dann könnten nicht vorhergesehene Unregelmäßigkeiten und Ereignisse eingetreten sein, beispielsweise der Ausfall einer erwarteten Werkzeugschneide oder aber auch ein Systemartefakt an anderer Stelle.

Da das erfindungsgemäße Verfahren häufig zum Vermessen von auf einen geometrischen Körper auflastenden Kräften, Momenten oder an diesem vorgenommenen Verformungen in Systemen mit rotierenden, insbesondere um eine Rotationsachse rotierenden geometrischen Körpern vorgenommen wird, aber auch in anderen Fällen, in denen sich entsprechende Symmetrien im System ergeben, wird eine Anordnung der Kraft- bzw. Verformungssensoren häufig in einer solchen Weise vorgenommen werden, dass eine erste Gruppe entlang der axialen Vorzugsrichtung des Körpers, die z.B. entlang seiner Rotationsachse verlaufen kann, eine andere Gruppe entlang einer um diese Vorzugsachse gezogenen Kreislinie, also einer zirkularen Raumrichtung angeordnet werden. Eine besonders einfache und elegante Auswertung der so erhaltenen Messdaten erhält man dann, wenn man entsprechend dem hier berücksichtigten Koordinatensystem die Signalverläufe in Polarkoordinaten bzw. in Zylinderkoordinaten ausgibt, insbesondere graphisch darstellt, z.B. noch einmal aufgenommen über eine Zeitachse.

Für das erfindungsgemäße Messsystem und für die die Durchführung des erfindungsgemäßen Verfahrens können als Kraft- oder Verformungssensoren insbesondere DMS-Sensoren oder SAW-Sensoren (SAW für Surface Acustic Waves, akustische Oberflächenwellen) Verwendung finden. Insbesondere bietet es sich hier an, eine Übertragung der Ausgangssignale der Sensoren bzw. von durch Weiterbearbeitung der Sensorsignale erhaltene Datensignale an einen in der Auswerteeinrichtung eingebundenen Empfänger drahtlos zu gestalten, z.B. über eine Funktechnik, wie sie heute vielfach in der Transpondertechnologie Verwendung findet.

Selbstverständlich ist die Anzahl der Kraft- bzw. Verformungssensoren nicht auf eine Mindestzahl von z.B. acht festgelegt. Hier können vielmehr größere Anzahlen Verwendung finden, können z.B. je Gruppe mehr als vier Sensoren angeordnet sein, können aber auch mehr als zwei Gruppen vorgesehen sein, insbesondere eine dritte Gruppe entlang einer dritten unabhängigen Raumrichtung in dem in Bezug auf den geometrischen Körper ortsfesten Koordinatensystem. Entsprechend können bei der Verwendung von Brückenschaltungen auch mehr als nur zwei Brückenschaltungen gebildet und deren Ausgangssignale für die Auswertung zugrunde gelegt werden.

Die erfindungsgemäßen Messsysteme sind nicht darauf beschränkt, hier allein Verformungen oder anliegende Kräfte oder Momente zu erfassen. Sie können vielmehr gekoppelt sein mit Sensorik zum Erfassen weiterer Parameter, wie z.B. Temperatur, Druck oder dgl. Auch können Teile der Auswerteeinrichtung, insbesondere Teile einer Auswerteelektronik in einer Mikroschaltung bereits auf dem geometrischen Körper selbst realisiert sein. Weitere Bestandteile der Signalauswerteeinheit können dann getrennt von dem geometrischen Körper gebildet sein, zu denen dann entsprechende Daten aus der auf dem geometrischen Körper angeordneten Elektronik übermittelt werden, insbesondere über eine drahtlose Übermittlung.

Weitere Vorteile und Merkmale ergeben sich aus der nachfolgenden Beschreibung eines Ausführungsbeispiels anhand der beigefügten Figuren. Dabei zeigen:
- Figur 1: eine schematische Schnittdarstellung durch eine Anordnung zweier ineinander passgefügter Körper mit an unterschiedlichen Positionen der Grenzflächen angeordneten Kraftsensoren,
- Figur 2: eine Aufsicht auf die Anordnung gemäß Figur 1.

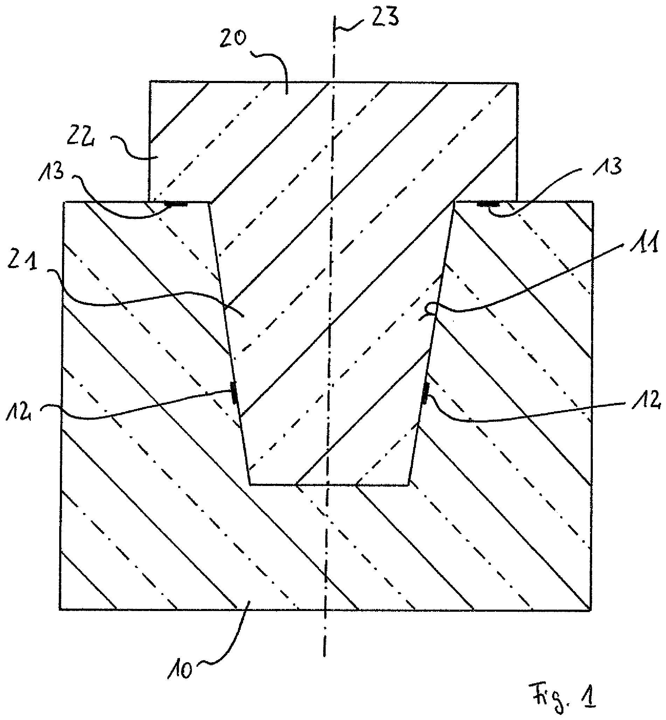

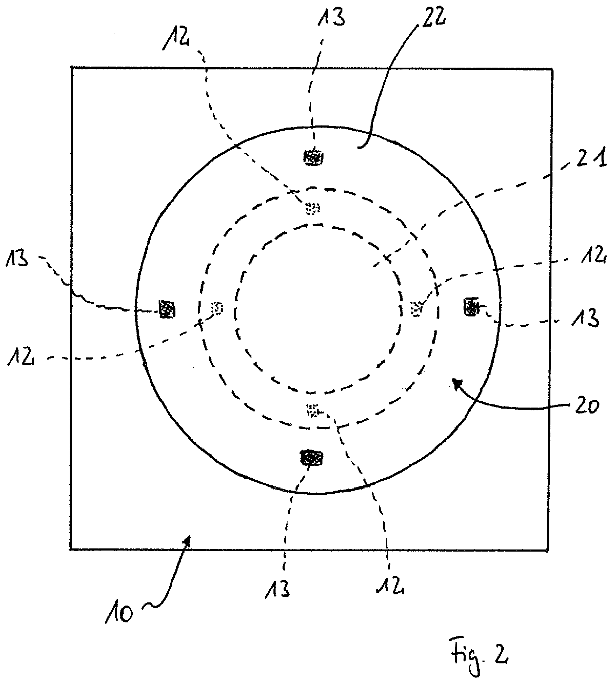

In der Figur 1 ist schematisch eine Schnittdarstellung durch eine Anordnung aus zwei ineinander passgefügten Körpern 10, 20 dargestellt. Der Körper 10 weist eine in den Körper hinein gearbeitete, konisch gebildete Aufnahme 11 auf, in der ein korrespondierend konisch geformter Anschlusszapfen 21 des Körpers 20 eingesetzt ist. Der Körper 20 weist darüber hinaus einen den Anschlusszapfen 21 seitlich überragenden Kragen 22 auf. Wie insbesondere in Figur 2 zu erkennen ist, ist der Körper 20 um seine Längsachse 23 rotationssymetrisch gebildet mit einem umlaufend überstehenden Kragen 22.

In dem Körper 10 sind im Innern der Aufnahme 11 auf gleicher Höhe senkrecht zu der Längsachse 23 des Körpers 20 erste Kraftsensoren 12 so angeordnet, dass sie von dem Anschlusszapfen 21 auf die Oberfläche der Aufnahme 11 übertragene Kräfte, die senkrecht zu der Grenzflächen wirken, erfassen können. Wie in Figur 2 zu erkennen ist, sind in diesem Ausführungsbeispiel insgesamt vier derartiger erster Kraftsensoren 12 angeordnet, jeweils in einem Winkelversatz von 90° um die Längsachse 23 herum.

Zweite Kraftsensoren 13 sind in dem Körper 10 in einem Bereich der Oberfläche angeordnet, der von dem umlaufenden Kragen 22 des zweiten Körpers 20 abgedeckt wird, wenn der zweite Körper 20 mit seinem Anschlusszapfen 21 in der Aufnahme 11 des ersten Körpers sitzt. Diese zweiten Kraftsensoren 13 sind derart aufgebaut und eingerichtet, dass sie senkrecht zu der Oberfläche des ersten Körpers 10, in dem Bereich, in dem sie angeordnet sind, also parallel zu der Längsachse 23 wirkende Kräfte erfassen und aufnehmen können.

Auch hier zeigt wiederum die Figur 2, dass insgesamt vier solcher zweiten Kraftsensoren 13 in dem Ausführungsbeispiel angeordnet sind, erneut jeweils in einer 90°-Verteilung um die Längsachse 23, in diesem Ausführungsbeispiel gleich ausgerichtet in der Radialverteilung wie die ersten Kraftsensoren 12.

Wirken nun auf einem der Körper 10 oder 20 Kräfte ein, werden entsprechende Messwerte der Kraftsensoren 12 bzw. 13 ausgelöst. Wirkt z.B. auf den Körper 20 eine in Richtung der Längsachse 23 verlaufende Kraft ein, so messen, wenn die Krafteinwirkung exakt parallel zu der Längsachse 23 verläuft, die Kraftsensoren 13 einen jeweils gleich großen Wert. Auch die Kraftsensoren 12 werden bei einer solchen Situation einen Wert für eine Kraft messen, nämlich den senkrecht zu der Oberfläche der Aufnahme 11 in diesem Bereich wirkenden Vektoranteil der in Richtung der Längsachse 23 wirkenden Kraft.

Im Rahmen der vorliegenden Erfindung werden nun für die Auswertung einer solchen einwirkenden Kraft die Signalausgänge der Kraftsensoren 12 bzw. 13 miteinander in Relation gesetzt. Dies kann auf ganz unterschiedliche Weise erfolgen. So können bspw. die zweiten Kraftsensoren 13 additiv miteinander verschaltet werden, um so ein Signal für die Gesamtgröße der in Richtung der in Längsachse 23 auflastenden Kraft zu erhalten.

Ebenso können aber auch von den zweiten Kraftsensoren Paare von jeweils einander gegenüberliegenden Sensoren subtraktiv verschaltet sein, z.B. in Form der Verschaltung in einer Wheatstone'schen Brücke, um so nur dann einen Ausschlag zu erhalten, wenn eine in der Richtung von einer parallelen Verlaufsrichtung zu der Längsachse 23 abweichende Kräfte zu messen. In einem solchen Ausführungsbeispiel werden dann auch die ersten Kraftsensoren 12 in gleicher Weise jeweils paarweise einander gegenüberliegend subtraktiv verschaltet, um auch über diese, vektorielle Kraftanteile in einer zweiten, von der ersten parallel zur Längsachse 23 verlaufenden Messrichtung der ersten Kraftsensoren 13 unabhängigen Messrichtung zu erfassen. Treten nun Querkräfte, also Kräfte, die quer zur Längsachse 23 des ersten Körpers verlaufen, auf, so können diese insbesondere auch bereits bei sehr kleinen Werten von den ersten Kraftsensoren 12 erfasst werden, da diese für Kraftanteile in einer entsprechenden Querrichtung besonders empfindlich sind. Die zweiten Kraftsensoren 13, die von den auftretenden Kräften lediglich die in Richtung der Längsachse 23 verlaufende Kraftkomponente messen, sind für geringe Abweichungen der Kräfte von einem solchen Verlauf parallel zu der Längsachse 23 vergleichsweise unempfindlich.

Die Kenntnis einer entsprechenden von der Längsrichtung 23 abweichenden Verlaufsrichtung einer einwirkenden Kraft kann z.B. dann von hohem Interesse sein, wenn der erste Körper 10 mit der Aufnahme 11 eine Werkzeugaufnahme (eine Werkzeugspindel) einer Bearbeitungsmaschine, der zweite Körper 20 ein Kopplungsabschnitt eines Werkzeuges ist. Wenn nämlich bei einem Werkzeugwechsel ein Fremdkörper, z.B. ein Span, in die Aufnahme 11 gerät und dort bis zum Grund oder an einen anderen Punkt fällt, so führt dieser zu einer Störung der Plananlage des zweiten Körpers 20, mithin zu einem Verkanten oder bei einem in Richtung der Längsachse 23 verlaufenden Spannprozesses zu einer entsprechenden asymmetrischen Krafteinleitung, d.h. einer Querkraft, die insbesondere von den ersten Kraftsensoren 12 sehr empfindlich aufgenommen und bei einer wie oben beschriebenen subtraktiven Verschaltung festgestellt wird. Die gleiche Funktionalität kann auch für die sicheren Erkennung von geometrischen Fehlern der Kontaktflächen des Körpers 20 genutzt werden.

In anderen Beispielen kann es aber von besonderem Vorteil sein, die Kraftsensoren 12 nicht etwa subtraktiv zu verschalten, sondern in anderer Weise, um z.B. Informationen über die genaue Größe auftretender Querkräfte zu erhalten, z.B. während einer Bearbeitung mit einem Werkzeug, um die Angriffskräfte festzustellen, mit denen z.B. eine Frässchneide in ein Werkzeug greift. So können bspw., wenn ein dreischneidiges Werkzeug verwendet wird, die Angriffskräfte der drei Schneiden erfasst und miteinander verglichen werden. Kommt es hier zu Asymmetrien der Angriffskräfte, so kann eine Aussage über den Verschleiß des Werkzeuges oder einen sonstigen Fehler getroffen werden.

In gleicher Weise können auch jeweils Kraftsensoren der ersten Kraftsensoren 12 und der zweiten Kraftsensoren 13 miteinander in Relation gesetzt werden, um hier weitere dynamisch anlastende Kräfte zu erfassen und nachzuhalten.

Hierfür sind die Kraftsensoren 12, 13 in einer in den Figuren nicht näher dargestellten Weise mit einer entsprechenden Signalleitung mit einer Steuerung bzw. einer Auswerteeinheit verbunden bzw. mit einer Sendeeinheit zum Übermitteln entsprechender Signale auf drahtlosem Wege an einen außerhalb der beiden Körper 10, 20 angeordneten Empfänger zur weiteren Signalverarbeitung.

Die Kraftsensoren 12, 13, bei denen es sich auch um Verformungssensoren handeln kann, können bspw. Dehnungsmessstreifen (sog. DMS-Sensoren) sein. Hier kommen aber auch Sensoren anderer Bauart, z.B. SAW-Sensoren, in Betracht. Die letztgenannten Sensoren haben den Vorteil, dass sie zusätzlich zur Erfassung weiterer Messgrößen verwendet werden können, z.B. zur Temperaturmessung und dgl..

Werden die Ausgangssignale analog erhalten (so z.B. bei DMS-Sensoren), können entsprechende Relationen zwischen den Signalausgängen durch analoge Verschaltung gewonnen werden (z.B. durch die bereits erwähnten Wheatstone'schen Brücken). Liegen digitale Signalausgänge vor (z.B. bei SAW-Sensoren) so erfolgt die Korrelation der Signale in einer entsprechenden digitalen Auswerteeinheit. Hierbei ergibt sich dann insbesondere der Vorteil, dass auf einfache Weise und ohne Verlust der Signalstärke (der bei analogen Signalen durch entsprechende Teiler der Signalleitungen für mehrere parallele Auswertungen hinzunehmen ist) mehrere Auswertungen vorgenommen werden können, d.h. Paare von Sensoren additiv oder subtraktiv oder in sonstiger Weise miteinander in Relation gesetzt werden können.

Der besondere Vorteil der erfindungsgemäßen Lösung besteht darin, dass hier zugleich Sensoren eingesetzt werden, die eine Kraft- bzw. Verformungsmessung mit vektoriellen Komponenten in linear unabhängigen Richtungen vornehmen können, so dass Messungen hoch genau erfolgen können und zugleich durch die Korrelation in unterschiedlichster Weise eine große Vielzahl an Informationen gewonnen werden können. Zur Auswertung der gewonnen Informationen können dann wiederum geeignete Koordinatensysteme gewählt werden, im Beispiel des in den Figuren dargestellten Systems bietet sich z.B. ein Zylinderkoordinatensystem mit einer Koordinatenachse entlang der Längsachse 23 und entsprechenden Winkelkoordinaten an.
- 10: Körper
- 11: Aufnahme
- 12: erste Kraftsensoren
- 13: zweite Kraftsensoren
- 20: Körper
- 21: Anschlusszapfen
- 22: Kragen
- 23: Längsachse

## Patentansprüche

1. Verfahren zur Ermittlung von Verformungen eines geometrischen Körpers bzw. zum Messen von auf einen geometrischen Körper wirkenden Kräften bzw. Momenten mittels Kraft- oder Verformungsmesssensoren, wobei an dem geometrischen Körper mehrere Kraft- oder Verformungsmesssensoren in wenigstens zwei Gruppen so angeordnet werden, dass eine erste Gruppe der Kraft- oder Verformungssensoren auf dem geometrischen Körper lastende Kräfte bzw. Verformungen des geometrischen Körpers entlang einer ersten Raumrichtung bezogen auf ein relativ zu dem geometrischen Körper ortsfesten Koordinatensystem erfasst und eine zweite Gruppe der Kraft- oder Verformungssensoren auf dem geometrischen Körper lastende Kräfte bzw. Verformungen des geometrischen Körpers entlang einer zweiten Raumrichtung bezogen auf ein relativ zu dem geometrischen Körper ortsfestes Koordinatensystem erfasst, die von der ersten Raumrichtung unabhängig ist, und dass Signalausgänge der Kraft- oder Verformungssensoren zur Signalerfassung und -auswertung und Ermittlung bzw. Beurteilung von in unterschiedlichen Raumrichtungen wirkenden Kraft- bzw. Verformungskomponenten zueinander in Relation gesetzt werden, wobei die Signalausgänge der Kraft- oder Verformungssensoren in einer elektrischen Brückenschaltung verschaltet werden, wobei je Gruppe der Kraft- oder Verformungssensoren wenigstens vier Kraft- oder Verformungssensoren vorgesehen werden und wobei jeweils vier der Kraft- oder Verformungssensoren mit ihren Signalausgängen in einer elektrischen Brückenschaltung verbunden werden und die Ausgangssignale der so gebildeten wenigstens zwei elektrischen Brückenschaltungen für die Ermittlung der Verformungen bzw. Kräfte oder Momente ausgewertet werden, wobei die Verschaltung der Signalausgänge der Kraft- oder Verformungssensoren in den elektrischen Brückenschaltungen so gewählt ist, dass Ausgangssignale der Brückenschaltungen proportional zu der einwirkenden Kraft bzw. zu dem auflastenden Moment bzw. zu einer Verformung des geometrischen Körpers auftreten, **dadurch gekennzeichnet, dass** die Auswertung der Ausgangssignale der wenigstens zwei elektrischen Brückenschaltungen derart erfolgt, dass diese proportional zur einwirkenden Kraft bzw. zu dem auflastenden Moment bzw. zu einer Verformung des geometrischen Körpers auftretenden Signale zunächst untereinander vergleichen und hinsichtlich auftretender Symmetrien ausgewertet und dann, wenn diese Auswertung eine Plausibilität im Hinblick auf aufgrund einer Form des geometrischen Körpers und aufgrund erwarteter Kräfte, Momente oder Verformungen und ihrer Richtungen zu erwartende Ergebnisse aufweist, als Maß für die auflastende Kraft, für ein anliegendes Moment oder eine aufgetretene Verformung gewertet werden.

2. Verfahren nach Anspruch 1, **dadurch gekennzeichnet, dass** Signalausgänge von Kraft- oder Verformungssensoren additiv korreliert werden.

3. Verfahren nach einem der vorhergehenden Ansprüche, **dadurch gekennzeichnet, dass** Signalausgänge von Kraft- oder Verformungssensoren differenzbildend korreliert werden.

4. Verfahren nach einem der vorhergehenden Ansprüche, **dadurch gekennzeichnet, dass** der geometrische Körper eine Vorzugsachse aufweist und dass die erste Raumrichtung entlang der Vorzugsachse verläuft, die zweite Raumrichtung eine in Bezug auf die erste Raumrichtung radiale Raumrichtung bzw. eine entlang einer Umfangsrichtung um die erste Raumrichtung herum weisende, zirkulare Raumrichtung ist und dass eine Auswertung der Signale der elektrischen Brückenschaltung in polaren Koordinaten oder Zylinderkoordinaten erfolgt.

5. Messsystem zur Ermittlung von Verformungen eines geometrischen Körpers (10, 20) bzw. zum Messen von auf einen geometrischen Körper (10, 20) wirkenden Kräften bzw. Momenten mittels Kraft- oder Verformungsmesssensoren (12, 13), mit mehreren an dem geometrischen Körper (10) in wenigstens zwei Gruppen derart angeordneten Kraft- oder Verformungsmesssensoren (12, 13), dass eine erste Gruppe der Kraft- oder Verformungssensoren (12) auf dem geometrischen Körper (10) lastende Kräfte bzw. Verformungen des geometrischen Körpers (10) entlang einer ersten Raumrichtung eines in Bezug auf den geometrischen Körper (10) ortsfesten Koordinatensystems erfasst und eine zweite Gruppe der Kraft- oder Verformungssensoren (13) auf dem geometrischen Körper (10) lastende Kräfte bzw. Verformungen des geometrischen Körpers (10) entlang einer zweiten Raumrichtung eines in Bezug auf den geometrischen Körper (10) ortsfesten Koordinatensystems erfasst, die linear unabhängig von der ersten Raumrichtung ist, wobei eine Auswerteeinrichtung vorgesehen ist, die Signalausgänge der Kraft- oder Verformungssensoren (12, 13) zur Signalerfassung und -auswertung und zur Ermittlung bzw. Beurteilung von in unterschiedlichen Raumrichtungen wirkenden Kraft- bzw. Verformungskomponenten miteinander in Relation setzt, wobei die Auswerteeinrichtung elektrische Brückenschaltungen umfasst, wobei je Gruppe der Kraft- oder Verformungssensoren (12, 13) wenigstens vier Kraft- oder Verformungssensoren (12, 13) vorgesehen sind und jeweils vier der Kraft- oder Verformungssensoren (12, 13) mit ihren Signalausgängen in einer elektrischen Brückenschaltung verbunden sind, wobei die Auswerteeinrichtung eine Signalauswerteeinheit umfasst zur Auswertung der Ausgangssignale der so gebildeten wenigstens zwei elektrischen Brückenschaltungen für die Ermittlung der Verformungen bzw. Kräfte oder Momente und wobei die Signalausgänge der Kraft- oder Verformungssensoren (12, 13) in den elektrischen Brückenschaltungen so geschaltet sind, dass Ausgangssignale der Brückenschaltungen proportional zu der einwirkenden Kraft bzw. zu dem auflastenden Moment bzw. zu einer Verformung des geometrischen Körpers (10) auftreten, **dadurch gekennzeichnet, dass** die Signalauswerteeinheit dazu eingerichtet ist, die Ausgangssignale der wenigstens zwei elektrischen Brückenschaltungen derart durchzuführen, dass diese proportional zur einwirkenden Kraft bzw. zu dem auflastenden Moment bzw. zu einer Verformung des geometrischen Körpers (10) auftretenden Signale zunächst untereinander verglichen und hinsichtlich auftretender Symmetrien ausgewertet und dann, wenn diese Auswertung eine Plausibilität im Hinblick auf aufgrund einer Form des geometrischen Körpers und aufgrund erwarteter Kräfte, Momente oder Verformungen und ihrer Richtungen zu erwartende Ergebnisse aufweist, als Maß für die auflastende Kraft, für anliegende Moment oder eine aufgetretene Verformung gewertet werden.

6. Messsystem nach Anspruch 5, **dadurch gekennzeichnet, dass** die Auswerteeinrichtung dazu eingerichtet ist, die Signalausgänge von Kraft- oder Verformungssensoren (12, 13) additiv zu korrelieren.

7. Messsystem nach einem der Ansprüche 5 oder 6, **dadurch gekennzeichnet, dass** die Auswerteinrichtung dazu eingerichtet ist, die Signalausgänge von Kraft- oder Verformungssensoren (12, 13) differenzbildend zu korrelieren.

8. Messsystem nach einem der Ansprüche 5 bis 7, **dadurch gekennzeichnet, dass** der geometrische Körper (10) eine Vorzugsachse (23) aufweist und dass die erste Raumrichtung entlang der Vorzugsachse (23) verläuft, die zweite Raumrichtung eine in Bezug auf die erste Raumrichtung radiale Raumrichtung bzw. eine entlang einer Umfangsrichtung um die erste Raumrichtung herum weisende, zirkulare Raumrichtung ist und dass die Auswerteeinrichtung für eine Auswertung der verarbeiteten Signale in polaren Koordinaten oder Zylinderkoordinaten eingerichtet ist.

9. Messsystem nach einem der Ansprüche 5 bis 8, **dadurch gekennzeichnet, dass** die Kraft- oder Verformungssensoren (12, 13) DMS-Sensoren oder SAW-Sensoren umfassen.

10. Messsystem nach einem der Ansprüche 5 bis 9, **gekennzeichnet durch** Mittel zum drahtlosen Übertragen der Sensorsignale und/oder durch Weiterbearbeitung der Sensorsignale erhaltene Datensignale an einen Empfänger in der Auswerteeinheit.

## Claims

1. A method for determining deformations of a geometric body or for measuring forces or moments acting on a geometrical body by means of force or deformation measuring sensors, wherein a plurality of force or deformation measuring sensors are arranged in at least two groups on the geometric body, in such a way that a first group of the force or deformation sensors detects load forces or deformations of the geometric body exerted on the geometric body along a first spatial direction relative to a coordinate system that is stationary relative to the geometric body and a second group of the force or deformation sensors detects load forces or deformations of the geometric body exerted on the geometric body along a second spatial direction relative to a coordinate system that is stationary relative to the geometric body, which is independent of the first spatial direction, and in that signal outputs of the force or deformation sensors are combined for the purposes of signal detection and evaluation and determination or assessment of force or deformation components acting in different spatial directions, wherein the signal outputs of the force or deformation sensors are connected in an electrical bridge circuit, wherein at least four force or deformation sensors are provided per group of force or deformation sensors and wherein in each case four of the force or deformation sensors are connected to their signal outputs in an electrical bridge circuit and the output signals of the thus formed at least two electrical bridge circuits are evaluated for the purpose of determining the deformations or forces or moments, wherein the interconnection of the signal outputs of the force or deformation sensors in the electrical bridge circuits is selected in such a way that output signals of the bridge circuits occur proportional to the applied force or to the moment of loading or to a deformation of the geometric body, **characterized in that** the evaluation of the output signals of the at least two electrical bridge circuits takes place in such a way that they initially compare signals occurring with each other in proportion to the applied force or to the load-bearing moment or to a deformation of the geometric body which are then assessed with respect to occurring symmetries and then, if this evaluation has a plausibility with regard to results expected due to a shape of the geometric body and due to expected forces, moments or deformations and their directions, said results are considered as the reference for the loading force, for an applied moment or a deformation occurred.

2. The method according to claim 1, **characterized in that** signal outputs of force or deformation sensors are additively correlated.

3. The method according to one of the preceding claims, **characterized in that** signal outputs of force or deformation sensors are correlated in different ways.

4. The method according to one of the preceding claims, **characterized in that** the geometric body has a preferred axis and that the first spatial direction runs along the preferred axis, the second spatial direction is a radial spatial direction with respect to the first spatial direction or a circular spatial direction pointing along a circumferential direction around the first spatial direction and that an evaluation of the signals of the electrical bridge circuit takes place in polar coordinates or cylindrical coordinates.

5. The measuring system for determining deformations of a geometric body (10, 20) or for measuring forces or moments acting on a geometrical body (10, 20) by means of force or deformation measuring sensors (12, 13), with a plurality of force or deformation measuring sensors (12, 13) arranged in at least two groups on the geometric body (10) in such a way that a first group of the force or deformation sensors (12) detects forces or deformations of the geometric body (10) acting on the geometric body (10) along a first spatial direction of a coordinate system stationary with respect to the geometric body (10) and that a second group of the force or deformation sensors (13) detects forces or deformations of the geometric body (10) acting upon the geometric body (10) along a first spatial direction of a coordinate system stationary with respect to the geometric body (10), which is linearly independent of the first spatial direction, wherein an evaluation device is provided which combines the signal outputs of the force or deformation sensors (12, 13) for signal detection and evaluation and for the determination or assessment of force acting in different spatial directions force or deformation components, wherein the evaluation device comprises electrical bridge circuits, wherein at least four force or deformation sensors (12, 13) are provided per group of the force or deformation sensors (12, 13) and each four of the force or deformation sensors (12, 13) are connected to their signal outputs in an electrical bridge circuit, wherein the evaluation device comprises a signal evaluation unit for evaluating the output signals of said at least two electrical bridge circuits thus formed for the determination of the deformations or forces or moments and wherein the signal outputs of the force or deformation sensors (12, 13) are connected in the electrical bridge circuits in such a way that output signals of the bridge circuits occur proportional to the applied force or to the moment of loading or to a deformation of the geometric body (10), **characterized in that** the signal evaluation unit is adapted to shape the output signals of the at least two electrical bridge circuits in such a way that these signals are initially compared with one another and evaluated with regard to occurring symmetries in proportion to the acting force or to the moment of loading or to a deformation of the geometric body (10) and then, if this evaluation has a plausibility with regard to results expected due to a shape of the geometric body and due to expected forces, moments or deformations and their directions, said results are considered as the reference for the loading force, for an applied moment or a deformation occurred.

6. The measuring system according to claim 5, **characterized in that** the evaluation device is adapted to additively correlate the signal outputs of force or deformation sensors (12, 13).

7. The measuring system according to one of claims 5 or 6, **characterized in that** the evaluation device is adapted to correlate the signal outputs of force or deformation sensors (12, 13) in a differential manner.

8. The measuring system according to one of claims 5 to 7, **characterized in that** the geometric body (10) has a preferred axis (23) and that the first spatial direction runs along the preferred axis (23), the second spatial direction is a radial spatial direction with respect to the first spatial direction or a circular spatial direction pointing along a circumferential direction around the first spatial direction and that the evaluation device is set up for an evaluation of the processed signals in polar coordinates or cylindrical coordinates.

9. The measuring system according to one of claims 5 to 8, **characterized in that** the force or deformation sensors (12, 13) comprise strain gauge sensors or SAW sensors.

10. The measuring system according to one of Claims 5 to 9, **characterized by** means for wireless transmission of the sensor signals and/or data signals obtained by further processing of the sensor signals to a receiver in the evaluation unit.

## Revendications

1. Procédé pour déterminer les déformations d'un corps géométrique ou pour mesurer les forces ou les moments agissant sur un corps géométrique au moyen de capteurs de mesure de force ou de déformation, dans lequel une pluralité de capteurs de mesure de force ou de déformation sont agencés en au moins deux groupes sur le corps géométrique, de telle sorte qu'un premier groupe de capteurs de force ou de déformation détecte des forces de charge ou des déformations du corps géométrique exercées sur le corps géométrique le long d'une première direction spatiale par rapport à un système de coordonnées qui est stationnaire par rapport au corps géométrique et un deuxième groupe de capteurs de force ou de déformation détecte des forces de charge ou des déformations du corps géométrique exercées sur le corps géométrique le long d'une seconde direction spatiale par rapport à un système de coordonnées qui est fixe par rapport au corps géométrique, qui est indépendant de la première direction spatiale, et en ce que les sorties de signal des capteurs de force ou de déformation sont combinées aux fins de la détection et de l'évaluation du signal et de la détermination ou de l'évaluation des composantes de force ou de déformation agissant dans des directions spatiales différentes, dans lequel les sorties de signaux des capteurs de force ou de déformation sont reliés à un circuit électrique en pont, dans lequel au moins quatre capteurs de force ou de déformation sont prévus par groupe de capteurs de force ou de déformation et dans lequel dans chaque cas quatre des capteurs de force ou de déformation sont connectés à leurs sorties de signal dans un circuit en pont électrique et les signaux de sortie des au moins deux circuits de pont électrique ainsi formés sont évalués dans le but de déterminer les déformations ou les forces ou les moments, dans lequel l'interconnexion des sorties de signal des capteurs de force ou de déformation dans les circuits à pont électrique est choisie de telle manière que les signaux de sortie des circuits en pont sont proportionnels à la force appliquée ou au moment du chargement ou à une déformation du corps géométrique, **caractérisé en ce que** l'évaluation des signaux de sortie desdits au moins deux circuits de pont électrique se produit de telle manière qu'ils comparent initialement les signaux se produisant les uns avec les autres proportionnellement à la force appliquée ou au moment porteur de charge ou à une déformation du corps géométrique qui sont ensuite évalués en ce qui concerne les symétries en présence et ensuite, si cette évaluation a une vraisemblance en ce qui concerne les résultats escomptés en raison de la forme géométrique du corps et en raison des forces attendues, des moments attendus ou des déformations attendues et leurs directions, lesdits résultats sont considérés comme référence pour la force de charge, pour un moment appliqué ou une déformation survenue.

2. Procédé selon la revendication 1, **caractérisé en ce que** les sorties de signaux des capteurs de force ou de déformation sont corrélées de manière additive.

3. Procédé selon la revendication 1, **caractérisé en ce que** les sorties de signaux des capteurs de force ou de déformation sont corrélées de manières différentes.

4. Procédé selon l'une des revendications précédentes, **caractérisé en ce que** le corps géométrique a un axe préféré et que la première direction spatiale suit l'axe préféré, la seconde direction spatiale est une direction spatiale radiale par rapport à la première direction spatiale ou une direction spatiale circulaire dirigée le long d'une direction circonférentielle autour de la première direction spatiale et qu'une évaluation des signaux du circuit de pont électrique fait s'exprime en coordonnées polaires ou en coordonnées cylindriques.

5. Système de mesure pour déterminer les déformations d'un corps géométrique (10, 20) ou pour mesurer les forces ou les moments agissant sur un corps géométrique (10, 20) au moyen de capteurs de mesure de force ou de déformation (12, 13), dans lequel une pluralité de capteurs de mesure de force ou de déformation (12, 13) sont agencés en au moins deux groupes sur le corps géométrique (10), de telle sorte qu'un premier groupe de capteurs de force ou de déformation (12) détecte des forces de charge ou des déformations du corps géométrique (10) exercées sur le corps géométrique le long d'une première direction spatiale par rapport à un système de coordonnées qui est stationnaire par rapport au corps géométrique (10) et un deuxième groupe de capteurs de force ou de déformation (13) détecte des forces de charge ou des déformations du corps géométrique (10) exercées sur le corps géométrique (10) le long d'une seconde direction spatiale par rapport à un système de coordonnées qui est fixe par rapport au corps géométrique (10), qui est linéairement indépendant de la première direction spatiale, dans lequel un dispositif d'évaluation est prévu qui combine les sorties de signaux des capteurs de force ou de déformation (12, 13) pour la détection et l'évaluation des signaux et pour la détermination ou l'évaluation de la force agissant dans différentes directions spatiales des forces ou des composantes de déformation, dans lequel le dispositif d'évaluation comprend des circuits à pont électrique, dans lequel au moins quatre capteurs de force ou de déformation (12, 13) sont prévus par groupe de capteurs de force ou de déformation (12, 13) et chacun des quatre capteurs de force ou de déformation (12, 13) est connecté à leurs sorties de signal dans un circuit de pont électrique, dans lequel le dispositif d'évaluation comprend une unité d'évaluation de signal pour évaluer les signaux de sortie desdits au moins deux circuits en pont électrique ainsi formé pour la détermination des déformations ou des forces ou des moments et dans lequel les sorties de signaux des capteurs de force ou de déformation (12, 13) sont connectés dans les circuits de pont électrique de telle manière les signaux de sortie des circuits en pont sont proportionnels à la force appliquée ou au moment du chargement ou à une déformation du corps géométrique (10), **caractérisé en ce que** l'unité d'évaluation de signal est conçue pour façonner les signaux de sortie des au moins deux circuits de pont électrique de telle manière que ces signaux sont initialement comparés entre eux et évalués en ce qui concerne les symétries apparaissant proportionnellement à la force agissante ou au moment du chargement ou à une déformation du corps géométrique (10) et ensuite, si cette évaluation a une vraisemblance en ce qui concerne les résultats escomptés en raison de la forme géométrique du corps et en raison des forces attendues, des moments attendus ou des déformations attendues et leurs directions, lesdits résultats sont considérés comme référence pour la force de charge, pour un moment appliqué ou une déformation survenue.

6. Système de mesure selon la revendication 5, **caractérisé en ce que** le dispositif d'évaluation est adapté pour corréler de façon additive les sorties de signaux de capteurs de force ou de déformation (12, 13).

7. Système de mesure selon l'une des revendications 5 ou 6, **caractérisé en ce que** le dispositif d'évaluation est adapté pour corréler de manière différentielle les sorties de signaux des capteurs de force ou de déformation (12, 13).

8. Système de mesure selon l'une des revendications 5 à 7, **caractérisé en ce que** le corps géométrique (10) a un axe préféré (23) et que la première direction spatiale suit l'axe préféré (23), la seconde direction spatiale est une direction spatiale radiale par rapport à la première direction spatiale ou une direction spatiale circulaire dirigée le long d'une direction circonférentielle autour de la première direction spatiale et qu'une évaluation des signaux du circuit de pont électrique fait s'exprime en coordonnées polaires ou en coordonnées cylindriques.

9. Système de mesure selon l'une des revendications 5 à 8, **caractérisé en ce que** les capteurs de force ou de déformation (12, 13) comprennent des capteurs à jauge de contrainte ou des capteurs SAW.

10. Système de mesure selon l'une des revendications 5 à 9, **caractérisé par** des moyens pour la transmission sans fil des signaux de capteur et/ou des signaux de données obtenus par un traitement ultérieur des signaux de capteur à un récepteur dans l'unité d'évaluation.
